# EUROPÄISCHE PATENTSCHRIFT

(11) **EP 4 514 562 B1**
(45) Veröffentlichungstag und Bekanntmachung des Hinweises auf die Patenterteilung: **25.03.2026**
(21) Anmeldenummer: 23730348.2
(22) Anmeldetag: 30.05.2023
(51) Int. Cl.: B23K 26/08, B23K 26/082, B23K 26/352, B23K 26/36, B23K 26/38, B23K 26/70

(54) **VERFAHREN ZUM ERMITTELN VON, INSBESONDERE STATISCHEN, GEOMETRIEFEHLERN EINER LASERMASCHINE ZUM SCHNEIDEN, GRAVIEREN, MARKIEREN UND/ODER BESCHRIFTEN EINES WERKSTÜCKES UND EIN VERFAHREN ZUM ERMITTELN DER LAGE BZW. POSITION DES MITTELPUNKTS EINES DETEKTORS AM DETEKTORELEMENT SOWIE KALIBRIER-SEGMENT UND LASERMASCHINE HIERFÜR**
L'EMPLACEMENT
PROCÉDÉ POUR DÉTERMINER DES DÉFAUTS GÉOMÉTRIQUES, EN PARTICULIER STATIQUES, D'UNE MACHINE LASER POUR LA DÉCOUPE, LA GRAVURE, LE MARQUAGE D'UNE PIÈCE ET/OU L'INSCRIPTION SUR UNE PIÈCE ET PROCÉDÉ POUR DÉTERMINER LA POSITION OU L'EMPLACEMENT DU POINT CENTRAL D'UN DÉTECTEUR SUR L'ÉLÉMENT DÉTECTEUR AINSI QUE SEGMENT D'ÉTALONNAGE ET MACHINE LASER À CET EFFET

(30) Priorität: 09.06.2022 AT 504042022
(43) Veröffentlichungstag der Anmeldung: 05.03.2025
(73) Patentinhaber: Trotec Laser GmbH, 4614 Marchtrenk (AT)
(72) Erfinder: REITER, Alexander, 4040 Lichtenberg (AT)
(86) Internationale Anmeldenummer: PCT/AT2023/060171
(87) Internationale Veröffentlichungsnummer: WO 2023/235906

(56) Entgegenhaltungen:
- EP-A1- 1 529 592
- WO-A1-2023/161223
- CN-A- 106 735 963
- DE-C1- 10 150 129
- JP-A- 2009 101 382
- KR-A- 20130 073 050
- US-A- 5 133 987
- US-A1- 2019 070 788

## Beschreibung

Die Erfindung betrifft ein Verfahren zum Ermitteln von, insbesondere statischen, Geometriefehlern einer Lasermaschine zum Schneiden, Gravieren, Markieren und/oder Beschriften eines Werkstückes und ein Kalibrier-Segment zum Ermitteln statischer Geometriefehler von Lasermaschinen gemäß den Ansprüchen 1 und 18.

Aus dem Stand der Technik sind bereits Laserplotter bekannt, bei denen eine oder mehrere Laserquellen betrieben werden. Hierzu wird von der Laserquelle ein Laserstrahl an einen Laserkopf bzw. eine Fokussiereinheit gesendet, wobei der Laserstrahl im Laserkopf bzw. der Fokussiereinheit über ein optisches Element, insbesondere eine Linse, fokussiert wird.

Ebenfalls sind aus dem Stand der Technik auch Flachbett-Laserplotter bekannt, die über einen vorzugsweise mit Riemenantrieb betriebenen Schlitten, an dem eine Fokussiereinheit bzw. Laserkopf ebenfalls verstellbar ist, ausgestattet sind. Vorzugsweise werden dabei flächige große Werkstücke, wie Papier, Platten, Textilien, usw. über einen Laser, insbesondere Laserstrahl, bearbeitet.

Weiters sind Galvo-Laser bzw. Galvo-Markierlaser bekannt, bei dem zumindest eine Laserquelle betrieben wird, wobei der erzeugte Laserstrahl an einem Laserkopf bzw. Fokussiereinheit gesendet wird. Im Laserkopf bzw. Fokussiereinheit ist ein Spiegel angeordnet, der den Laserstrahl in Richtung des Werkstückes ablenkt, wobei über eine Winkelverstellung zumindest eines Spiegels und gegebenenfalls Verfahren des Laserkopfes bzw. der Fokussiereinheit bzw. des Bearbeitungstisches der Laserstrahl über den gesamten Bearbeitungstisch gesteuert wird.

Nachteilig ist bei den obgenannten Lasermaschinen, dass keinerlei Vorkehrungen zur Ermittlung von Fertigungsfehlern oder in den für die Herstellung gültigen Form- und Lagetoleranzen befindlichen Nichtidealitäten, sogenannte statische Geometriefehler, vorhanden sind und somit jedes Gerät mühsam manuell ausgewertet und eingestellt werden muss.

Aus der DE 19732668 ist eine Vorrichtung und Verfahren zur Kalibrierung von Strahlabtastvorrichtungen, insbesondere Laser, bekannt, bei dem die Kalibriervorrichtung eine Kalibrierplatte mit definierten Markierungen, insbesondere Gitterstruktur, eine Detektorvorrichtung zum Erfassen der Markierung und eine Auswertevorrichtung zum Vergleich des Detektorsignals mit den entsprechenden Sollpositionen und zum Erzeugen eines Korrektursignals aus dem Vergleich aufweist. Die Kalibrierplatte entspricht dabei in etwa der Größe des Arbeitsbereichs bzw. des Bearbeitungstisches und wird auf den Bearbeitungstisch eingelegt. Seitlich oberhalb des Arbeitsbereichs sind die Detektorvorrichtungen in Form von Fotosensoren zum Erfassen einer diffusen reflektierten Strahlung von der Gitterstruktur. Der Laserstrahl wird dabei von einem Abtastkopf über zwei drehbare Spiegel auf die Gitterstruktur gerichtet. Eine weitere Ausführungsvariante zeigt die Anordnung der Fotosensoren unterhalb der Kalibrierplatte, wobei die unterschiedlichen Transmissionen des Laserstrahls an den Markierungen erfasst werden, wozu die Kalibrierplatte zumindest teilweise strahlungsdurchlässig sein muss. Nachteilig ist hierbei, dass damit lediglich ein Korrekturwert für die Abweichung des Lasers bzw. Laserstrahls hinterlegt wird.

Weiters ist aus der DE 4437284 A1 ein Verfahren zur Kalibrierung der Steuerung zur Ablenkung eines Laserstrahls für Rapid-Prototyping-Systeme bekannt, bei dem ein Testbild durch Bestrahlen eines lichtempfindlichen Mediums, insbesondere ein Thermopapier oder UV-empfindliches Fotopapier, mit einem Laserstrahl eines Galvanometerscanners an vorgegebenen Positionen erzeugt wird. Zum Auswerten des Testbildes ist eine Videokamera oder Pixelscanner vorgesehen. Dabei werden die Daten einem Auswerteprogramm übergeben, um Abweichungen der Ist-Position zur Soll-Position des Lasers zu ermitteln und in einer Korrekturtabelle dem Scannersystem zur Verfügung zu stellen. Nachteilig ist hierbei, dass das benötigte, lichtempfindliche Medium Verbrauchsmaterial darstellt.

Aus der WO 00/03833 A1 ist ein Verfahren zum Kalibrieren einer Laserbearbeitungsmaschine bekannt, bei der eine Testplatte anstelle des Werkstückes eingelegt wird und anschließend durch den Laserstrahl eine Testmarkierung erzeugt wird, wobei die Position der Testmarkierung anschließend vermessen wird. Darauffolgende wird eine Kalibrierplatte eingelegt, wobei von einer Kamera die Kalibrierplatte aufgenommen wird, worauf eine nachgeschaltete Steuereinheit einen von der Kamera hervorgerufenen Abbildungsfehler bestimmt und aus der gemessenen Position der Testmarkierung unter Berücksichtigung der Abbildungsfehler ein optischer Versatz der Laserquelle bestimmt wird. Hierbei kann der Laserstrahl über zwei verstellbare Spiegel über die Fläche des Bearbeitungstisches verstellt werden.

Die WO 2006/045128 A1 beschreibt ein Verfahren zum Gravieren von Druckplatten, insbesondere Intaglio Druckplatten, mit wenigstens einer Laserstrahlenquelle mit optisch verstellbarem System. An einer vorgebbaren Kalibrierposition der Druckplatte oder einer Kalibrierplatte wird gemäß einem vorgebbaren Soll-Muster mittels der Laserstrahlenquelle und des optischen Systems ein Ist-Muster graviert, worauf das Ist-Muster vermessen wird und aus dem Ist-Muster und dem Soll-Muster werden Korrekturfaktoren ermittelt und die Druckplatte unter Berücksichtigung der Korrekturfaktoren graviert.

Weiters ist aus der EP 3641967 B1 ein Verfahren und Anordnung zur Kalibrierung eines Kopfsystems einer Energiestrahlenquelle bekannt, bei der eine Kalibrierplatte, die mehrere Referenzmarkierungen aufweist, angeordnet wird. Ein Beschussmedium aus mindestens einem Material, das für die Strahlung der Quelle empfindlich ist. Eine optische Messeinrichtung wird über dem Beschussmedium verschoben, um für jede Referenzmarkierung der Kalibrierplatte mindestens ein Bild eines Bereichs zu erfassen, in dem sich zum einen die Referenzmarkierung und zum anderen die Sollzielposition in unmittelbarer Nähe

Ein Verfahren mit den Merkmalen des Oberbegriffs des Anspruchs 1 ist aus der DE 101 50 129 C1 bekannt, während ein Kalibrier-Segment nach dem Oberbegriff des Anspruchs 18 aus der CN 106 735 963 A bekannt ist.

Nachteil bei den genannten Dokumenten ist, dass sämtliche Kalibriersysteme für die Erfassung ein zusätzliches angeordnetes Aufnahmegerät, insbesondere Kamera, Fotosensoren, zur eingelegten Kalibrierplatte benötigen.

Die Aufgabe der Erfindung liegt darin, ein Verfahren zum Ermitteln von, insbesondere statischen, Geometriefehlern einer Lasermaschine zum Schneiden, Gravieren, Markieren und/oder Beschriften eines und ein Kalibrier-Segment zu schaffen, bei dem einerseits die obgenannten Nachteile vermieden werden und andererseits eine hohe Bedienerfreundlichkeit erreicht wird.

Die Aufgabe wird durch ein Verfahren nach Anspruch 1 und ein Kalibrier-Segment nach Anspruch 18 gelöst. Vorteilhafte Ausbildungen und/oder Verfahrensmaßnahmen sind in den Unteransprüchen beschrieben.

Vorteilhaft ist hierbei, dass durch den Einsatz eines Kalibrier-Segmentes nach der Herstellung einer Lasermaschine oder auch für im Betrieb befindliche Lasermaschinen eventuell auftretende Fehler, insbesondere Geometriefehler, einfach und rasch herausgefunden werden können, da das Resultat der Geometriefehler eine Abweichung des Brennpunktes des Lasers und/oder des Lichtstrahls der Lichtquelle verursacht. Durch die spezielle Ausbildung der Detektorelemente kann somit Form- und Lageabweichungen, Welligkeiten, Tischebeneinheit, Achsschiefstellungen, usw. ermittelt werden, die an der Lasermaschine und/oder externen Komponente, insbesondere Laptop, angezeigt und verarbeitet werden können. Hierbei ist es auch möglich, dass Informationen zum Beheben der Fehler aufgerufen und angezeigt werden können, sodass das Wartungspersonal bzw. Monteur einfach die einzelnen Fehlerpunkte abarbeiten müssen, um eine optimal eingestellte Lasermaschine dem Kunden übergeben zu können. Derartige statische Geometriefehler treten bei jeder Lasermaschine aufgrund der Herstellungstoleranzen auf, sodass mechanische oder softwaretechnische Korrekturen vorteilhaft sind, um die Genauigkeit der Bearbeitung zu erhöhen. Grundsätzlich ist es nicht zwingend notwendig die Geometriefehler zu beheben, was jedoch an der Qualität der Laserbearbeitung erkennbar ist.

Erfindungsgemäß ist das Detektorelement aus einer 4-Quadranten Fotodiode oder Bildsensor gebildet und der Lichtstrahl wird auf den Detektor gerichtet, worauf eine Bewegung des Lichtstrahls oder des Detektorelements gemäß definierter Bewegungsbahn durchgeführt wird, sodass ein Schnittpunkt zu den Rändern der Quadranten des Detektors und/oder die Mittelposition des Detektors ermittelt wird, worauf die Lage der Mittelposition des Detektors berechnet wird.

Vorteilhaft ist hierbei, dass dadurch eine einfache Möglichkeit der Ermittlung des positionierten Lichtstrahls auf dem Detektorelement durch Ausführung einer Bewegungsbahn geschaffen wurde. Dabei wird die ausgeführte Bewegungsbahn erfasst bzw. gemessen und bei Überschreitung bzw. Verlassen eines Quadranten ein Marker gesetzt, sodass die exakte Position des Lichtstrahls bzw. die Abweichung zum Mittelpunkt des Detektors, insbesondere des Bildsensors, ermittelt werden kann. Beim Einsatz in einem Kalibrier-Segment können somit Rückschlüsse auf statische Geometriefehler aufgrund der Abweichung der Positionen der Mittelpunkte der Detektoren beim Einsatz in Lasermaschinen gemacht werden, d.h., dass ohne Geometriefehler der Lichtpunkt bzw. Lichtstrahl immer in Zentrum, also am Mittelpunkt, der Detektoren oder einem bestimmten festgelegten Punkt der Detektoren auftreffen würden.

Von Vorteil sind auch die Maßnahmen, bei denen am Bearbeitungstisch ein Kalibrier-Segment eingelegt wird, das in etwa die Größe des Bearbeitungstisches aufweist. Dadurch wird erreicht, dass nur ein einziges Mal die Kalibrierplatte am Bearbeitungstisch richtig positioniert werden muss, sodass anschließend sämtliche Detektorelemente angefahren und ausgewertet werden können. Hierbei wird vorzugsweise ein automatischer Ablauf durchgeführt, da die einzelnen Positionen der Detektoren am Detektorelement bekannt sind, sodass die Steuereinheit nach Beendigung einer Analyse eines Detektors das nächste Detektorelement, insbesondere den nächsten Detektor am nächsten Detektorelement, anfahren kann. Weiters sind dabei eine Vielzahl von Detektorelemente auf der Kalibrierplatte angeordnet, sodass sämtliche wichtigen Positionen abgefahren werden. Die Detektorelemente sind dabei auch in unterschiedlichen Höhen auf der Kalibrierplatte angeordnet, um sämtliche Geometriefehler ermitteln zu können. D.h., dass beispielsweise mehrere Detektorelemente direkt auf der Kalibrierplatte, mehrere Detektorelemente in einer Höhe von 10mm, mehrere Detektorelemente in einer Höhe von 20mm und mehrere Detektorelemente in einer Höhe von 30mm auf einer Kalibrierplatte usw. angeordnet sind.

Es sind aber auch die Maßnahmen von Vorteil, bei denen am Bearbeitungstisch ein oder mehrere Kalibrier-Segmente eingelegt werden, die kleiner als die Größe des Bearbeitungstisches ausgebildet sind. Dadurch wird erreicht, dass auch größere Bearbeitungstische einfach analysiert werden können, indem ein kleine, leicht handhabbare Kalibrierplatte mehrmals eingelegt wird, um eine vollständige Analyse vollziehen zu können. Alternativ ist auch eine Verwendung von mehreren Kalibriersegmenten möglich, die jeweils kleiner als der Bearbeitungstisch sind, d.h., dass zwei oder mehrere Kalibrier-Segmente gleichzeitig am Bearbeitungstisch aufgelegt sind, sodass anschließend die Detektorelemente abgefahren bzw. abgearbeitet werden können, um Fehler zu ermitteln.

Von Vorteil sind die Maßnahmen, bei denen am Bearbeitungstisch das Kalibrier-Segment mehrmals an unterschiedlichen Positionen des Bearbeitungstisches eingelegt wird. Dadurch wird erreicht, dass aufgrund der Vielzahl von verschiedenen Einleg-Positionen die Qualität der Analyse beeinflusst werden kann. Wird das Kalibrier-Segment nur wenige Male umpositioniert, so ist die Analysequalität geringer, als wenn das Kalibrier-Segment sehr oft an unterschiedlichen Positionen des Bearbeitungstische eingelegt wird. Hierbei ist es auch möglich, dass das Kalibrier-Segment in unterschiedlichen Ausrichtungen eingelegt werden kann.

Vorteilhaft sind die Maßnahmen, bei denen die lichtempfindlichen Detektorelement, insbesondere ein Mittelpunkt der Detektoren, exakt zueinander vermessen wurden und vorzugsweise die Daten auf dem Kalibrier-Segment abrufbar sind oder in der Steuereinheit oder einer externen Komponente, insbesondere Laptop, oder Cloud hinterlegt sind. Dadurch wird erreicht, dass nach der erstmaligen Positionierung eines Lichtstrahls auf ein Detektorelement die weiteren Detektorelement e automatisch angesteuert bzw. angefahren werden können und somit die an den unterschiedlichen Positionen entstehenden Abweichungen des Lichtstrahls zum Zentrum bzw. Mittelpunkt eines Detektors ermittelt werden kann. Hierbei ist es wesentlich, dass die Vermessung der Mittelpunkte der Detektoren und der Lage zueinander möglichst genau erfasst wird. Wenn die Position der Detektorelemente am Kalibrier-Segment gespeichert sind, ist es von Vorteil, dass das Kalibrier-Segment direkt mit der Lasermaschine und/oder der externen Komponente verbunden wird, damit die Positionen übermittelt werden können, sodass ein automatischer Ablauf bzw. Auswertung durchgeführt werden kann.

Erfindungsgemäß wird am Detektorelement eine Fotodiode, insbesondere 4-Quadranten Fotodiode, oder ein Bildsensor eingesetzt.

Dadurch wird erreicht, dass ein Beleuchten mit einem Lichtstrahl, insbesondere mit dem LaserPointer, auf die lichtempfindliche Schicht, also den Detektor, einfach erkannt wird und die Mittenposition des Detektorelements, insbesondere des Detektors, festgestellt werden kann.

Erfindungsgemäß wird mit dem aktivierten Lichtstrahl eine definierte Bewegungsbahn, vorzugsweise durch Verstellen der Fokussiereinheit bzw. Laserkopfes abgefahren, um die Position des Lichtstrahls, insbesondere des LaserPointer-Punktes, am lichtempfindlichen Detektor auszuwerten. Dadurch wird erreicht, dass damit die Schnittpunkte zu den Rändern des Detektors, insbesondere der Quadranten, durch Erfassen der durchgeführten Bahn ermittelt werden kann und somit die Abweichung zum Mittelpunkt berechnet werden kann. Beim Einsatz eines Bildsensors kann durch Ausführen einer Bewegungsbahn die Abweichung zum Mittelpunkt oder Vermessungspunkt erfasst werden.

Vorteilhaft sind die Maßnahmen, bei denen die Bewegungsbahn in Form mehrerer unterschiedlicher Kreise oder einer Spirale ausgeführt wird. Dadurch wird erreicht, dass sämtliche Bereiche der lichtempfindlichen Schicht des Detektorelementes erreicht werden. Vorteilhaft sind die Maßnahmen, bei denen die Bewegungsbahn in Form eines linearen Rasters ausgeführt wird. Dadurch wird erreicht, dass ebenfalls sämtliche Bereiche der lichtempfindlichen Schicht des Detektorelements erreicht wird.

Erfindungsgemäß wird ein Schnittpunkt des Lichtstrahls mit den Rändern der Quadranten des Detektors ermittelt**,** worauf die Lage der Mittelposition des Detektors berechnet wird. Dadurch wird erreicht, dass eine exakte Abweichung der Ist-Position des Lichtstrahls zum Mittelpunkt des Detektors ermittelt werden kann. Alternativ wird bei einem Bildsensor die Mittelposition ermittelt.

Es sind aber auch die Maßnahmen von Vorteil, bei denen mit dem Lichtstrahl eine Zentrierbewegung auf die Mitte des Bildsensors durchgeführt wird, wodurch die Lage der Mittelposition des Bildsensors ermittelt wird. Dadurch wird erreicht, dass auch beim Einsatz eine Bildsensors die Lage des Mittelpunktes durch Verfahren der Lichtquelle oder des Bildsensors möglich ist. Hierbei sind auch die Mittelpunkte der Bildsensoren zueinander, wie bei der Fotodiode, exakt vermessen.

Erfindungsgemäß weist das Kalibrier-Segment eine Steuerelektronik auf, die drahtgebunden über eine Anschlussleiste oder drahtlos mit der Steuereinheit der Lasermaschine oder einer externen Komponente, insbesondere Computer bzw. Laptop, verbunden wird. Dadurch wird erreicht, dass damit alle erforderlichen Komponenten auf dem Kalibrier-Segment zur Auswertung der Detektorpunkte angeschlossen sind und somit nur noch eine Datenverbindung mittels Leitung oder drahtlos hergestellt werden muss.

Vorteilhaft sind die Maßnahmen, bei denen am Kalibrier-Segment ein optischer Marker, insbesondere Data Matrix-Code bzw. QR-Code, zur näherungsweisen Ermittlung der Lage des Kalibrier-Segments abgefragt wird. Dadurch wird erreicht, dass die Kalibrierplatte in beliebiger Position am Bearbeitungstisch aufgelegt werden kann, da durch Scannen bzw. Aufnahme des optischen Markers die Lage der Kalibrierplatte bestimmt werden kann. Darüber hinaus können noch weitere Informationen aufgerufen und angezeigt werden.

Es sind aber auch die Maßnahmen von Vorteil, bei denen vom Kalibrierungsprozess die statischen Geometriefehler wie Achsschiefstellungen, Linearitätsfehler, Achsbiegungen, Achsverdrehungen, Offsetfehler, usw. ausgewertet werden. Dadurch wird erreicht, dass eine qualitativ einwandfreie Lasermaschine an dem Kunden übergeben werden kann, da durch Auffinden der Geometriefehler diese zuvor behoben werden können.

Vorteilhaft sind die Maßnahmen, bei denen nach Auswertung der statischen Geometriefehler diese mechanisch, regelungstechnisch und/oder softwaretechnisch korrigiert werden. Dadurch die die Qualität eines Bearbeitungsprozesses wesentlich erhöht.

Von Vorteil sind die Maßnahmen, bei denen in, insbesondere vorgegebenen, Zeitabständen der Kalibrierprozess zur Überprüfung und gegebenenfalls Berichtigung der statischen Geometriefehler an Lasermaschinen durchgeführt wird. Dadurch wird erreicht, dass auch für bereits bestehende Anlage geometrische Fehler aufgefunden und behoben werden können.

Weiters wird die Aufgabe der Erfindung durch ein Kalibrier-Segment zum Ermitteln statischer Geometriefehler von Lasermaschinen gelöst, dass auf einer Kalibrierplatte zumindest drei lichtempfindliche Detektorelemente angeordnet sind, wobei die Detektorelemente in unterschiedlichen Höhen positioniert sind.

Vorteilhaft ist dabei, dass damit eine exakte Abweichung eines auftreffenden Lichtstrahls zum Mittelpunkt des Detektors ausgewertet werden kann. Hierbei kann aufgrund der unterschiedlichen Anordnung in der Höhe der Kalibrierplatte auch Achsschiefstellungen erfasst werden.

Von Vorteil ist die Ausbildung, bei der am Detektorelement eine Fotodiode, insbesondere durch eine 4-Quadranten Fotodiode, oder ein Bildsensor angeordnet ist. Dadurch wird erreicht, dass eine einfache Erkennung des Auftreffens des Lichtstrahles auf das Detektorelement, insbesondere dem lichtempfindlichen Detektor, geschaffen wird.

Es ist eine Ausbildung von Vorteil, bei der auf der Kalibrierplatte ein optischer Marker, insbesondere ein QR-Code bzw. Data Matrix-Code, zur Ermittlung der Lage der Kalibrierplatte angeordnet ist. Dadurch wird erreicht, dass durch Scannen oder Bildaufnahme des Markers einerseits die Lage/Ausrichtung bzw. Position der Kalibrierplatte festgestellt werden kann und andererseits zusätzliche Daten abgefragt bzw. aufgerufen werden können.

Von Vorteil ist eine Ausbildung, bei der auf der Kalibrierplatte eine Steuerelektronik zur Auswertung des auftreffenden Lichtstrahls auf einen Detektorelement, insbesondere Detektor, angeordnet ist. Dadurch wird erreicht, dass sämtliche Komponenten für die Anwendung des Kalibrier-Segmentes kompakt auf einer Kalibrierplatte angeordnet sind.

Grundsätzlich ist zu erwähnen, dass bei korrekter Herstellung, insbesondere Zusammenbau der einzelnen Elemente, einer Lasermaschine der abgegebene Lichtstrahl im Zentrum bzw. Mittelpunkt des lichtempfindlichen Detektors am Detektorelement auftreffen sollte. Weicht der Lichtstrahl vom Mittelpunkt ab, so liegt mit hoher Wahrscheinlichkeit ein statischer Geometriefehler an, der entweder manuell bzw. mechanisch, regelungstechnisch und/oder softwaretechnisch behoben werden kann.

Die Erfindung wird anschließend in Form von Ausführungsbeispielen beschrieben, wobei darauf hingewiesen wird, dass die Erfindung nicht auf die dargestellten und beschriebenen Ausführungsbeispiele bzw. Lösung begrenzt ist, sondern auf äquivalente Lösungen übertragen werden können.

Es zeigen:
- Fig.1: eine schaubildliche Darstellung einer Lasermaschine, insbesondere eines Laserplotters, zum Bearbeiten eines Werkstückes, in vereinfachter, schematischer Darstellung;
- Fig. 2: eine schaubildliche Darstellung einer Lasermaschine, insbesondere eines Flachbett-Laserplotters, in vereinfachter, schematischer Darstellung;
- Fig. 3: eine weitere schaubildliche Darstellung einer weiteren Lasermaschine, insbesondere eines Galvo-Markier-Lasers, zum Bearbeiten eines Werkstückes, in vereinfachter, schematischer Darstellung;
- Fig. 4: eine Draufsicht auf ein Kalibrier-Segment, in vereinfachter, schematischer Darstellung;
- Fig. 5: eine Seitenansicht des Kalibrier-Segmentes nach Figur 4, in vereinfachter, schematischer Darstellung;
- Fig. 6: ein Anwendungsbeispiel eines aufgelegten Kalibrier-Segmentes auf einem Bearbeitungstisch eines Flachbett-Laserplotters, bei dem das Kalibrier-Segment kleiner als der Bearbeitungstisch ausgebildet ist, in vereinfachter, schematischer Darstellung;
- Fig. 6a: eine schematische Darstellung des Bearbeitungstisches nach Fig. 6 mit mehreren Auflege-Positionen des Kalibrier-Segments, in vereinfachter, schematischer Darstellung;
- Fig. 7: ein weiteres Anwendungsbeispiel eines aufgelegten Kalibrier-Segmentes auf einem Bearbeitungstisch eines Laserplotters, bei dem das Kalibrier-Segment in etwa gleich groß als der Bearbeitungstisch ausgebildet ist, in vereinfachter, schematischer Darstellung;
- Fig. 8: eine Detailansicht eines Detektorelements des Kalibrier-Segments mit dargestelltem einwirkendem Lichtstrahl am Detektor einer Fotodiode, in vereinfachter, schematischer Darstellung;
- Fig. 9: die Detailansicht nach Figur 8 mit in strichlierten Linien durchzuführender Bewegungsbahn mit spiralförmigem Verlauf, in vereinfachter, schematischer Darstellung;
- Fig. 10: die weitere Detailansicht nach Figur 8 mit in strichlierten Linien durchzuführender weiteren Variante der Bewegungsbahn mit linearem kreuzförmigem Verlauf, in vereinfachter, schematischer Darstellung;
- Fig.11: eine Detailansicht eines Detektorelements des Kalibrier-Segments mit dargestelltem einwirkendem Lichtstrahl am Detektor eines Bildsensors, in vereinfachter, schematischer Darstellung.

Einführend sei festgehalten, dass in den unterschiedlichen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die beschriebene Figur bezogen und sind bei einer Lageänderung sinngemäß auf die neue Lage zu übertragen.

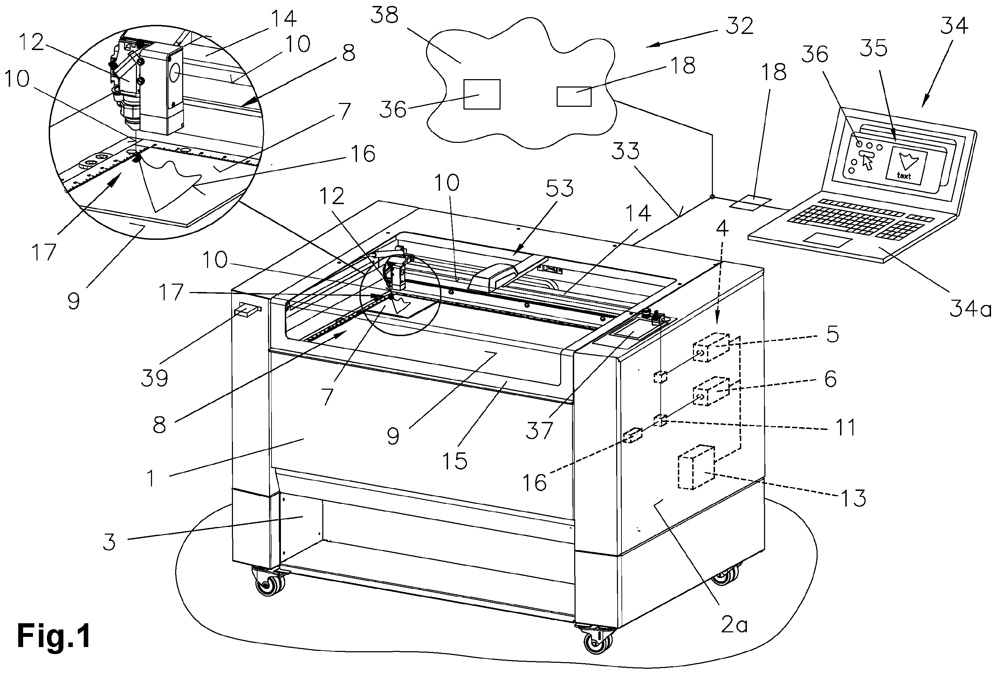

In den Fig. 1 bis 10 sind Ausführungsbeispiele für Lasermaschinen 1, insbesondere eines Laserplotters 2a, eines Flachbett-Laserplotter 2b und Galvo-Markierlaser 2c, gezeigt.

Beim gezeigten Laserplotter 2a, gemäß Fig. 1, ist in einem Gehäuse 3 zumindest eine, vorzugsweise zwei, Strahlenquelle/n 4 bzw. Laserquellen in Form von Lasern 5, 6 angeordnet. Die Laser 5 und 6 wirken vorzugsweise abwechselnd auf ein zu bearbeitendes Werkstück 7 ein. Das Werkstück 7 ist bzw. wird in einem Bearbeitungsraum 8 des Laserplotters 1, insbesondere auf einem Bearbeitungstisch 9 positioniert, wobei der Bearbeitungstisch 9 vorzugsweise in seiner Höhe verstellbar ist. Ein von einer Strahlenquelle 4, insbesondere dem Laser 5 oder 6, abgegebener Laserstrahl 10 wird über Umlenkelemente 11 an zumindest eine verfahrbare Fokussiereinheit 12 bzw. Laserkopf 12 gesendet, von der der Laserstrahl 10 in Richtung Werkstück 7 abgelenkt und zur Bearbeitung fokussiert wird. Die Steuerung, insbesondere die Positionssteuerung des Laserstrahls 10 zum Werkstück 7, erfolgt über eine in einer Steuereinheit 13 laufende Software, wobei das Werkstück 7 durch Verstellung eines Schlittens 14, an dem auch die Fokussiereinheit 12 verfahrbar angeordnet ist, über vorzugsweise einen Riemenantrieb in X-Y-Richtung bearbeitet wird. Hierbei ist es möglich, dass beispielsweise bei dem Bearbeitungsprozess "Gravur" die Verstellung des Schlittens 14 zeilenweise erfolgt, wogegen bei dem Bearbeitungsprozesse "Schneiden" der Schlitten 14 entsprechend der zu schneidenden Kontur verfahren wird, also nicht zeilenweise.

Bei derartigen Lasermaschinen 1, insbesondere Laserplottern 2a, ist es für die Sicherheit notwendig, dass zum Starten der Bearbeitung des Werkstückes 7 ein Deckel 15 bzw. Tür 15, der vorzugsweise zumindest teilweise transparent ausgebildet ist, geschlossen werden muss, wie dies in Fig. 1 dargestellt ist. Anschließend kann das Bedienerpersonal den Laserpunkt bzw. eine Lichtquelle 16 beispielsweise in Form eines Laser-Pointer 16, insbesondere Lichtstrahl 17 bzw. LaserPointer-Punkt 17, der in den Strahlengang des Lasers 5, 6 eingekoppelt ist und über die Fokussiereinheit 12 bzw. Laserkopf 12 in Richtung Bearbeitungstisch 8 abgelenkt wird, manuell oder auch automatisch am eingelegten Werkstück 7 positioniert werden, worauf ein Job 18 für die Bearbeitung des Werkstückes 7 gestartet werden kann. Am Ende des Jobs 18 wird anschließend der Schlitten 14 und die Fokussiereinheit 12 bzw. Laserkopf 12 vorzugsweise in die Ausgangsposition verstellt, sodass das fertiggestellte Werkstück 7 entnommen werden kann, worauf ein neuer Bearbeitungsprozess durch Einlegen eines neuen zu bearbeitenden Werkstücks 7 bzw. eines Rohlings 7 gestartet werden kann. Hierbei ist es von Vorteil, wenn das Ende der Bearbeitung optisch oder akustisch angezeigt wird, sodass der Nutzer nicht ständig die Lasermaschine, insbesondere den Laserplotter 1, beobachten muss. Der Vollständigkeit halber wird erwähnt, dass die Verstellung der Fokussiereinheit 12 bzw. Laserkopf 12 mit aktiviertem Lichtstrahl 17 auch bei geöffneten Deckel 17 möglich ist, jedoch der Laser 5, 6 nicht aktiviert werden kann.

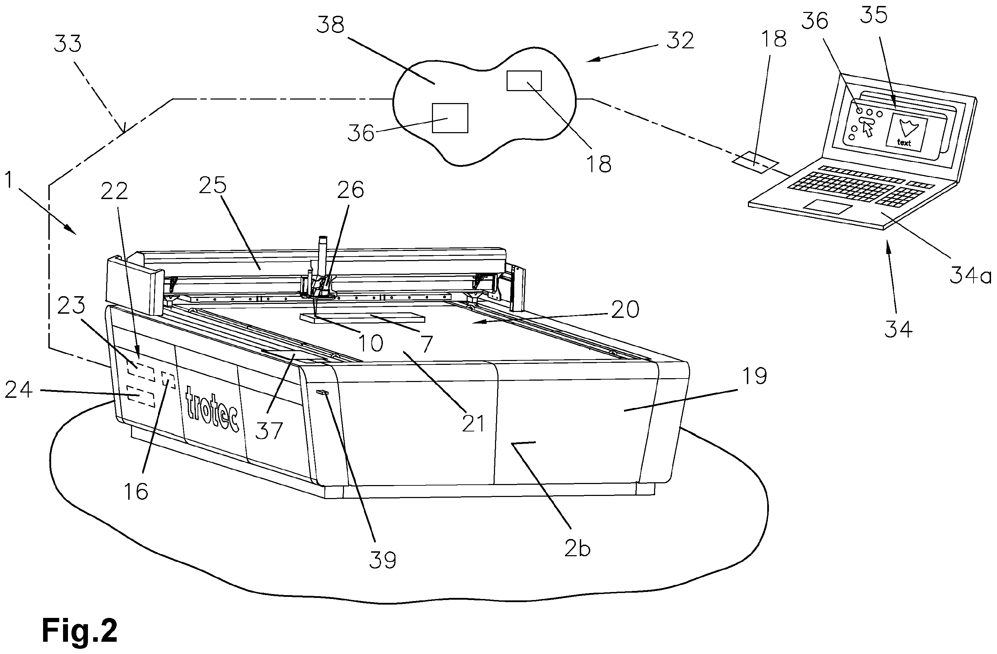

Gemäß Figuren 2 ist ein ähnlich funktionierender Flachbett-Laserplotter 2b zum Bearbeiten von Werkstücken 7 gezeigt, wobei der Flachbett-Laserplotter 2b ebenfalls zum Abarbeiten eines Jobs 18 für das Schneiden, Gravieren, Markieren und/oder Beschriften des vorzugsweise flachen Werkstückes 7 ausgebildet ist. Der Flachbett-Laserplotter 2b weist ein Gehäuse 19 auf, in dem sämtliche Elemente, wie beispielsweise Antriebe, Elektronik, Laserquelle, usw. integriert sind, sodass der Flachbett-Laserplotter 2b ebenfalls als Stand-Alone Gerät betrieben werden kann. Dabei weist der Flachbett-Laserplotter 2b zumindest einem Bearbeitungsraum 20 zum Positionieren des Werkstückes 7 auf einen Bearbeitungstisch 21 auf. Weiters weist der Flachbett-Laserplotter 2b zumindest eine Strahlenquellen 22 in Form eines Lasers 23 und einer Steuereinheit 24 zum Steuern des über vorzugsweise einen Riemenantrieb betriebenen Schlittens 25 mit daran verfahrbar angeordneten Fokussiereinheit 26 bzw. Laserkopf 26 auf. Ebenso weist der Flachbett-Laserplotter 2b eine Lichtquelle 16 vorzugsweise in Form eines LaserPointer 16 auf, wobei nunmehr die Lichtquelle 16 als zusätzliches Element ausgebildet ist, dass an der Fokussiereinheit 26 bzw. Laserkopf 26 montiert bzw. befestigt ist. Bei Aktivierung der Lichtquelle 16 wird der Lichtstrahl 17 direkt auf das darunter liegende Objekt, beispielsweise dem Bearbeitungstisch 21 oder das Werkstück 7 gerichtet. Es sei der Vollständigkeit halber erwähnt, dass die Lichtquelle 16, wie in Fig.1 beschrieben, auch integriert sein kann und in den Laserstrahlengang eingekoppelt wird. Ebenso ist es möglich, dass die Lichtquelle 16 beim Laserplotter 2a zusätzlich angeordnet sein kann, wie in Fig. 2b beschrieben.

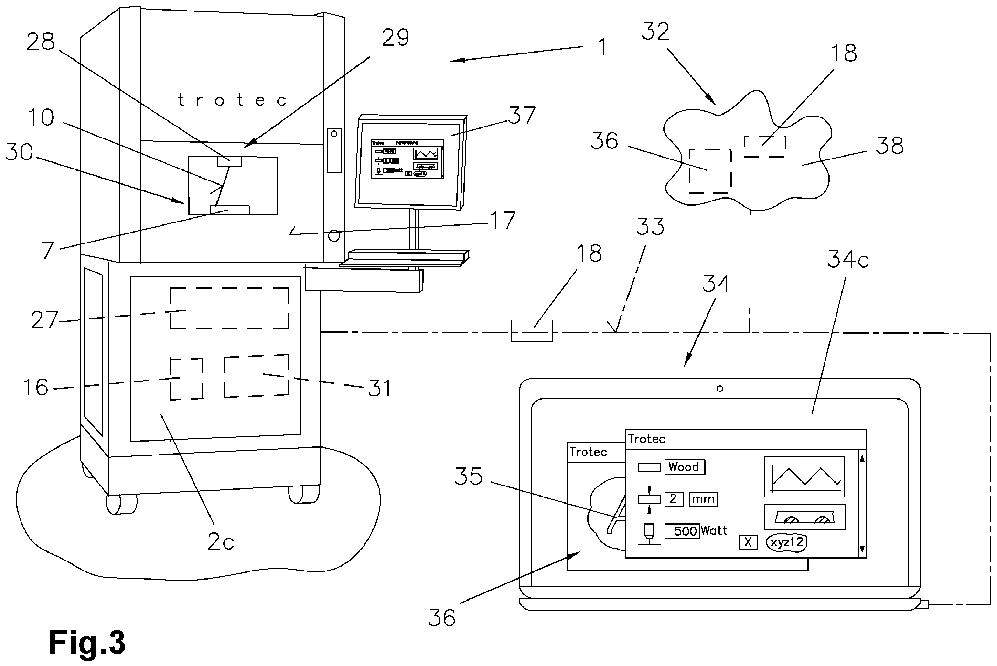

Ebenfalls sind sogenannte Galvo-Laser 2c bzw. Galvo-Markierlaser 2c, wie in Fig. 3 dargestellt, bekannt, bei denen der Laserstrahl 10 eines Lasers 27 über einen verstellbaren Spiegel 28 im Laserkopf 29 bzw. Fokussiereinheit 29 oberhalb des am Bearbeitungstisch 30 positionierten Werkstückes 7 in Richtung Werkstück 7 abgelenkt und positioniert wird. Dabei kann ebenfalls ein Lichtstrahl 17 (nicht dargestellt) einer Lichtquelle 16, insbesondere LaserPointer 16, in den Strahlengang des Laser 27 eingekoppelt werden oder am Laserkopf 12 angeordnet sein. Zur Ansteuerung und Regelung der einzelnen Elemente ist wiederum eine Steuereinheit 31 vorgesehen.

Der Vollständigkeit halber wird darauf hingewiesen, dass der Laserplotter 2a, der Flachbett-Laserplotter 2b und der Galvo-Markierlaser 2c über Anschlüsse bzw. Leitungen zur Energieversorgung oder zur Anbindung ans Intranet und/oder Internet 32 ausgestattet ist bzw. sein können. Dabei ist es möglich, dass über eine Leitung 33 oder drahtlos per WLan oder Bluetooth eine Verbindung mit externen Komponenten 34, wie einem Laptop 34a bzw. Computer, einer automatischen Zuführeinheit, ein Förderband, ein Entnahmeroboter usw. verbunden sein kann, sodass Daten von der externen Komponenten 34, insbesondere dem Laptop 34a, übertragen werden können. Hierzu wird beispielsweise an der externen Komponente 34, insbesondere einem Computer, Laptop 34a oder einem Steuergerät, eine Grafik 35 und/oder ein Text 35 über eine handelsübliche Software 36, wie beispielsweise CorelDraw, Paint, usw., oder über die eigene Anwendungssoftware 36, insbesondere Ruby 36, erstellt bzw. geladen, welche an die Steuereinheit 13,24,31 der Lasermaschine 1 vorzugsweise in Form des Jobs 18 exportiert bzw. übergeben wird. Vorzugsweise werden die zu übergebenden Daten von der gleichen oder einer anderen Software konvertiert, sodass die Steuereinheit 13,24,31 den Job 18 verarbeiten kann. Selbstverständlich ist es auch möglich, dass die Eingabe direkt am Laserplotter 2a, am Flachbett-Laserplotter 2b oder Galvo-Markierlaser 2c über die vorhandenen Eingabemittel 37, wie beispielsweise einen Touchscreen oder Eingabetasten, erfolgen kann oder ein entsprechender Job 18 von einem Speichermedium, wie beispielsweise einer Cloud 38, einen USB-Stick 39, usw., geladen wird. Nachdem die Daten, insbesondere der oder die Jobs 18, übertragen sind oder direkt erstellt bzw. vom Speichermedium geladen wurden, wird von der Lasermaschine 1, insbesondere dessen Steuereinheit 13, 24, 31, der Job 18 abgearbeitet. Dabei ist es möglich, dass mehrere Jobs 18 gleichzeitig in der Lasermaschine 1 gespeichert und nacheinander abgearbeitet werden können. Weiters ist es auch möglich, dass das Anwendersoftware 36 in der Cloud 38 installiert ist und von der Cloud 38 über einen Webbrowser aufgerufen werden kann.

Bei derartigen Lasermaschinen 1 ist es erforderlich, dass alle Komponenten bei der Herstellung des Gerätes exakt und richtig montiert werden, sodass es nach der Fertigstellung eines Gerätes unter großen Aufwand das Gerät überprüft werden muss. Hierbei können sogenannte Geometriefehler, wie Achsschiefstellungen, Form- und Lageabweichungen, Auflösungsfehler bei Encoder, Getriebeübersetzungsfehler, Fehler durch Riemen, Vorspannung, ..., Offsetfehler, usw. auftreten, die Abweichungen am Brennpunkt des Lasers 5,6,23,27, insbesondere des Laserstrahls 10, und Ungenauigkeiten bei der Positionierung und Orientierung am Werkstück 7 kommen kann.

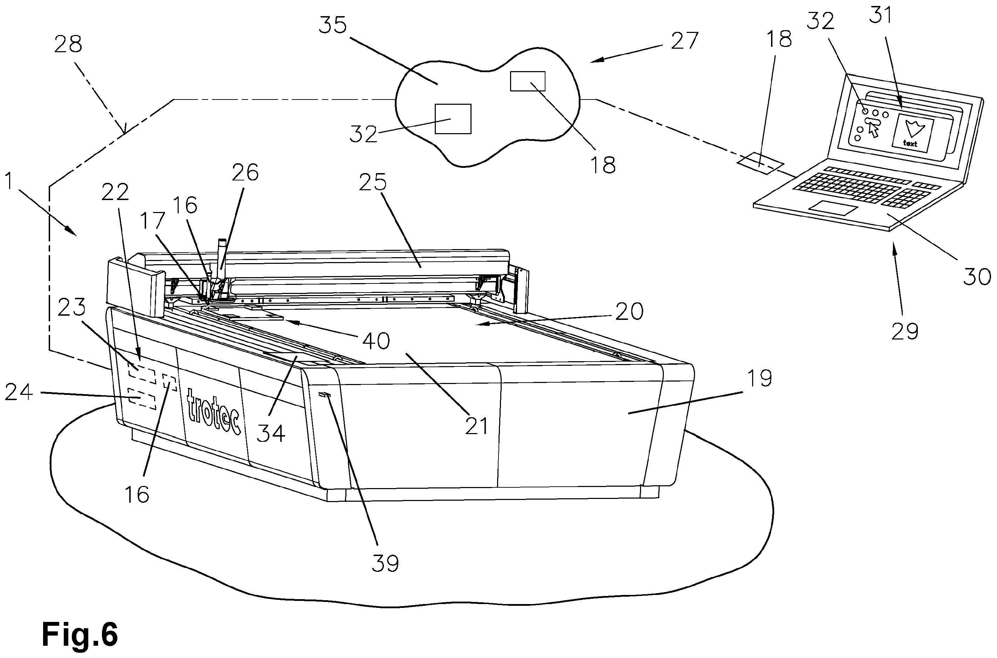

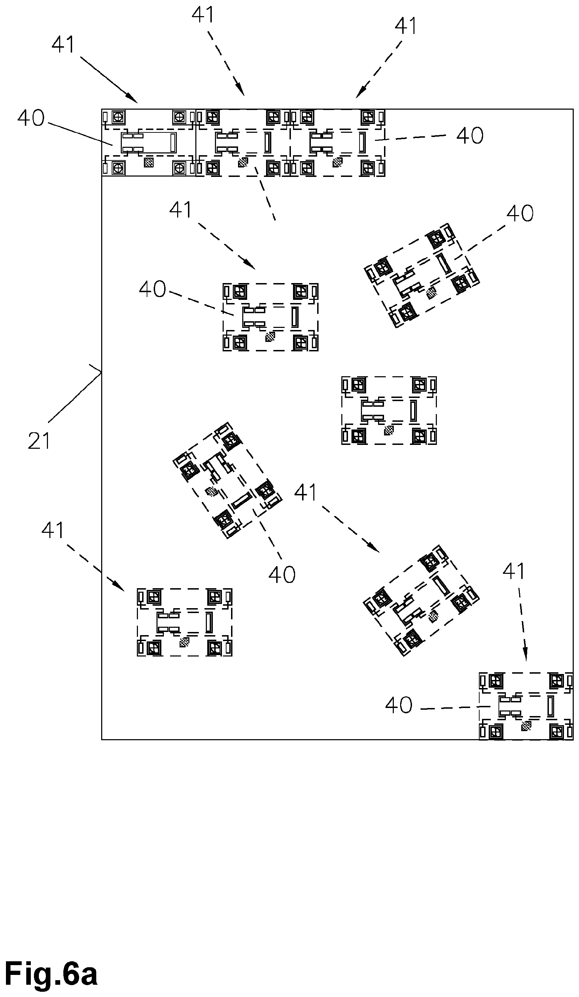

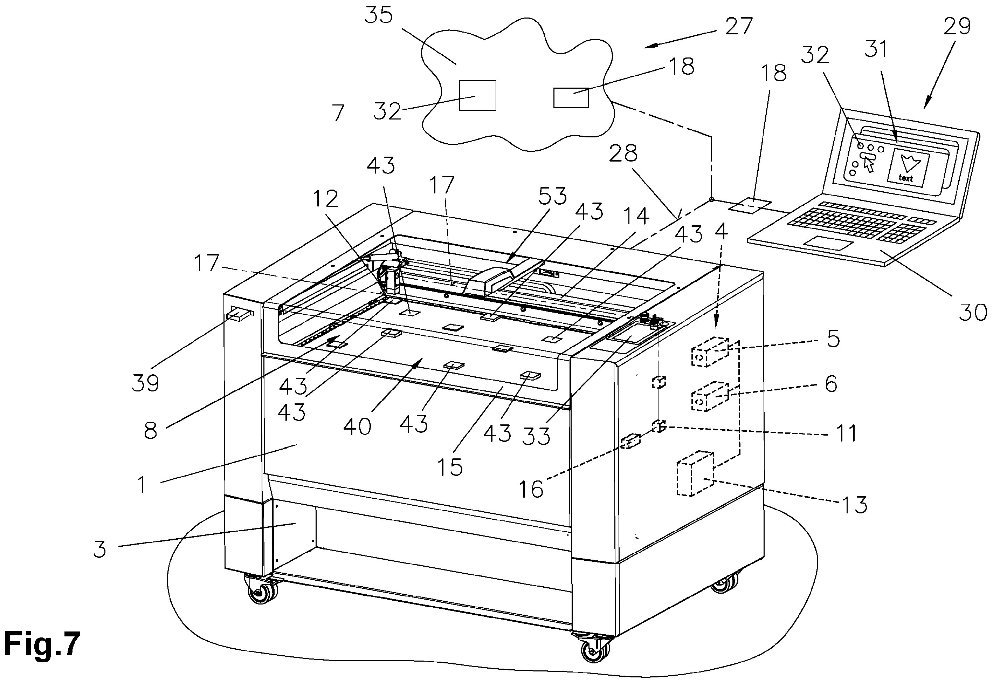

Um die aufwendigen Prüfungen zu beschleunigen und zu vereinfachen ist erfindungsgemäß vorgesehen, dass ein Kalibrier-Segment 40 am Bearbeitungstisch 9, 21, 30 aufgelegt wird und ein Kalibrierprozess gestartet wird. Dabei kann das Kalibrier-Segment 40 kleiner als der Bearbeitungstisch 9, 21, 30, wie in Figur 6 und 6a dargestellt, oder in etwa gleich groß wie der Bearbeitungstisch 9, 21, 30, wie in Figur 7 gezeigt, ausgebildet sein. Bei kleinerer Ausbildung des Kalibrier-Segments 40 ist es zum Erreichen einer hohen Qualität erforderlich, dass das Kalibrier-Segment 40 mehrmals an verschiedenen Positionen 41 oder mehrere Kalibrier-Segmente 40 am Bearbeitungstisch 9, 21, 30, wie in Figur 6a schematisch für den Bearbeitungstisch 30 gezeigt, aufgelegt werden, wobei je öfters das Kalibrier-Segment 40 eingelegt wird, umso genauer fällt das Ergebnis des Kalibrierprozesses aus. Dabei kann das Kalibrier-Segment 40 nebeneinander oder beliebig eingelegt werden.

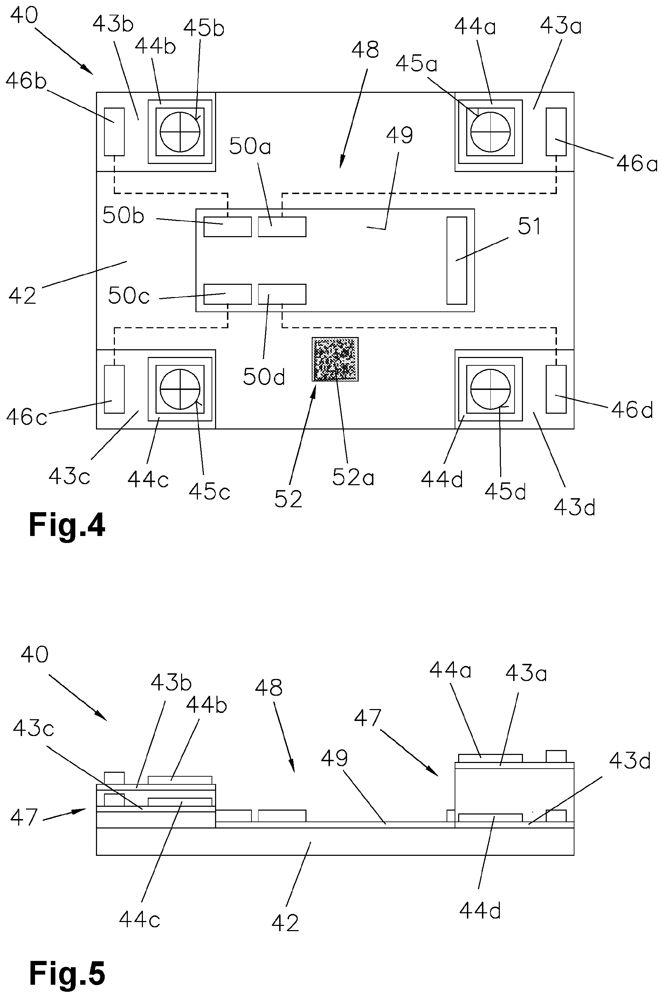

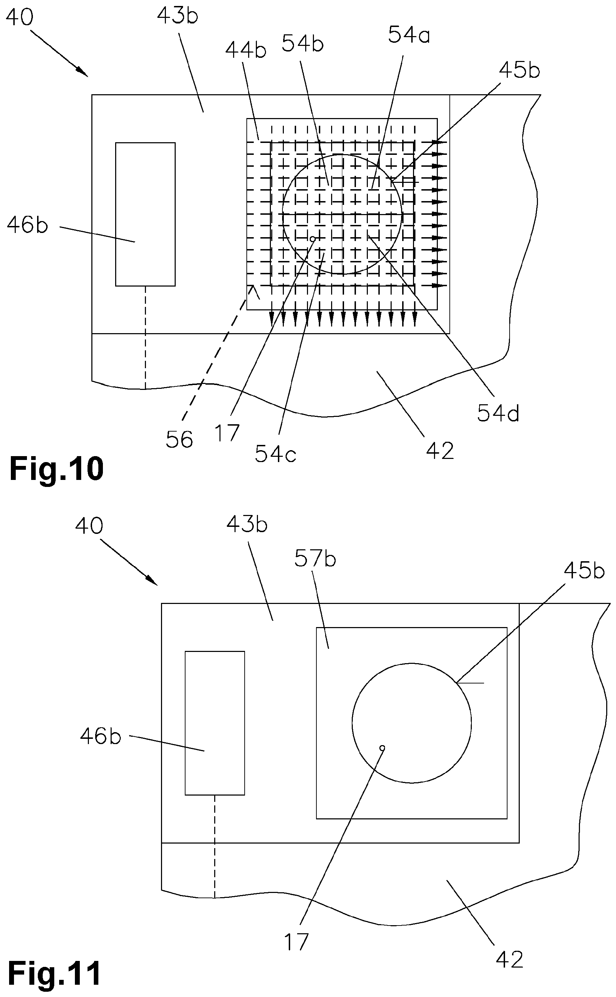

Aus den Figuren 4 und 5 ist nunmehr der Aufbau des Kalibrier-Segmentes 40 gezeigt. Hierbei besteht das Kalibrier-Segment 40 aus einer Kalibrierplatte 42, auf der zumindest drei, vorzugsweise vier oder mehrere, wie bei der Ausbildung in Figur 7 dargestellt, lichtempfindliche Detektorelemente 43a,b,c,d angebracht sind. Am Detektorelemente 43 (a-d) sind in dem dargestellten Ausführungsbeispiel Fotodioden 44a,b,c,d, insbesondere 4-Quadranten Fotodioden 44a-d, oder Bildsensoren 57, gemäß Figur 11, angeordnet. Das Detektorelement 43a-d weist dabei einen lichtempfindlichen Detektor 45a,b,c,d auf, der beim Einsatz einer Fotodiode 44a-d oder Bildsensor 57 durch die lichtempfindliche Schicht gebildet ist. Die Fotodioden 44a,b,c,d sind auf einer Leiterplatte mit elektronischen Bauelementen (nicht dargestellt) und einer Anschlussleiste 46a,b,c,d aufgebaut. Dabei weist das Detektorelement 43, insbesondere eine Fotodiode 44 oder ein Bildsensor 57, den lichtempfindlichen Detektor 45 auf, mit dem der ausgesendete Lichtstrahl 17 erfasst wird. Hierbei sind die einzelnen Detektorelemente 43a-d in unterschiedlichen Höhen 47 auf der Kalibrierplatte 42 angeordnet, d.h., dass beispielsweise ein Detektorelemente 43d direkt auf der Kalibrierplatte 42, das nächste Detektorelemente 43c um 10mm, das nächste Detektorelemente 43b um 20mm und das Detektorelemente 43a um 30mm erhöht angebracht sind, wie in Figur 5 dargestellt. Hierbei können auch mehrere gleich hoch angeordnete Detektorelemente 43a-d vorhanden sein, insbesondere wenn eine Vielzahl von Detektorelementen 43a-d auf einer Kalibrierplatte 42 angeordnet sind. Weiters weist das Kalibrier-Segment 40 in dem dargestellten Ausführungsbeispiel beispielsweise ein Steuerelektronik 48, die in Form einer Leiterplatte 49 und darauf angebrachten elektronischen Bauelementen (nicht dargestellt), auf, wobei an der Leiterplatte 49 ebenfalls Anschlussleisten 50a,b,c,d zum Verbinden mit den Detektorelementen 43a-b, wie mit strichlierten Linien dargestellt, angebracht sind. Damit die Steuerelektronik 48 mit der Lasermaschine 1, insbesondere der Steuereinheit 13,24,31, und/oder einer externen Komponente 34, insbesondere Laptop 34a, verbunden werden kann, ist eine entsprechende Anschlussleiste 51 vorgesehen. Selbstverständlich ist es möglich, dass das Kalibrier-Segment 40 nur die Detektorelemente 43 aufweist und die anderen Elemente, insbesondere die Steuerelektronik 48, gesondert angeordnet sind. Auch ist es möglich, dass die Anschlussleisten 46 und 50 entfallen können, sodass die Detektorelemente 43 direkt mit der Steuerelektronik 48 verbunden sind

Weiters weist das Kalibrier-Segment 40 einen vorzugsweise optischen Marker 52 in Form eines QR-Codes 52a bzw. Data Matrix-Code 52a auf. Der Marker 52 dient dazu, um die Einlegeposition am Bearbeitungstisch 9,21,30 und weitere Informationen zu ermitteln, wobei hierzu eine Kamera 53, wie schematisch in den Figuren 1 und 7 ersichtlich, oder ein anderes Aufnahmemittel eingesetzt wird. Dabei wird nach dem Einlegen des Kalibrier-Segmentes 40 mit der Kamera 53 zuerst ein oder mehrere Bilder des Bearbeitungstisches 9,21,30, wie dies bei einem Flachbett-Laserplotter 2b meist notwendig ist, aufgenommen, worauf anschließend der Marker 52 ausgewertet wird, wobei aufgrund der Position des Markers 52 die Richtung des eingelegten Kalibrier-Segmentes 40 bestimmt werden kann. Hierbei ist es auch möglich, dass das Einlegen des Kalibrier-Segmentes 40 manuell gemessen wird oder entsprechende Anschlagpositionen vorhanden sind.

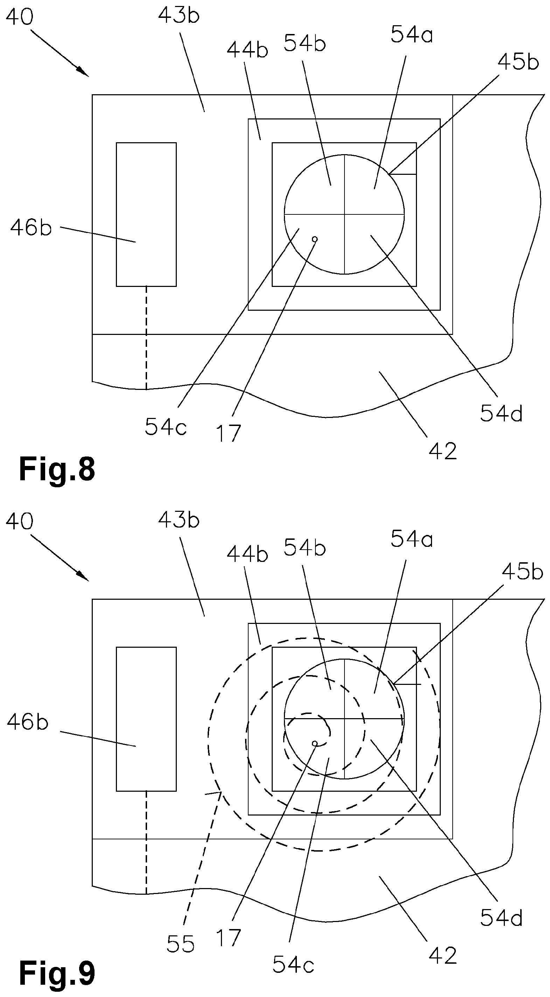

Nachdem die Einlegeposition manuell oder automatisch erkannt wurde, kann der Kalibrierprozess zum Auswerten von Geometriefehlern fortgeführt werden. Hierzu wird an der Lasermaschine 1 die Lichtquelle 16 aktiviert oder ist diese bereits aktiviert, worauf der Lichtstrahl 17 auf ein Detektorelemente 43 (a-d), insbesondere auf den Detektor 45(a-d), automatisch oder manuell positioniert wird, wie dies schematisch in Figur 8 bis 10 gezeigt. Hierbei wird die Positionierung durch das Auftreffen des Lichtstrahls 17 auf die Fotodiode 44 oder Bildsensor 57, also auf den Detektor 45(a-d) der Fotodiode 44 oder Bildsensor 57, erkannt, sodass bei einer automatischen Verstellung der Fokussiereinheit 12,26,29 diese gestoppt wird oder bei einer manuellen Verstellung dies durch ein Signal, Piepston oder Leuchtsymbol angezeigt wird. Nachdem der Lichtstrahl 17 am Detektorelemente 43, insbesondere am Detektor 45, positioniert wurde, kann der Kalibrierprozess automatisch durchlaufen werden, sodass die Position des Mittelpunkts des Detektors 45a-d ermittelt wird, sodass anschließend das nächste Detektorelemente 43a-d, insbesondere der nächste Detektor 45 am nächsten Detektorelement 43, angefahren wird, bis sämtlich angeordnete Detektorelemente 43 angefahren wurden.

Man kann also sagen, dass ein Kalibrier-Segment 40 mit zumindest drei lichtempfindlichen Detektorelementen 43 (a-d) am Bearbeitungstisch 9,21,30 aufgelegt wird und ein Kalibrierprozess gestartet wird, bei dem ein in dem Laserstrahlverlauf eingekoppelter Lichtquelle 17 oder zusätzlicher an der Fokussiereinheit bzw. Laserkopf 12,26,29 montierte Lichtquelle 16, insbesondere ein LaserPointer 16, aktiviert wird und die Fokussiereinheit bzw. der Laserkopf 12,26,29 automatisch eine definierte Position oder manuell eine eingestellte Position eines Detektorelementes 43 (a-d) anfährt, worauf das Auftreffen des Lichtstrahls 17, insbesondere eines LaserPointer-Punktes 17, auf dem lichtempfindlichen Detektor45 (a-d) erfasst und ausgewertet wird, worauf vorzugweise das nächste lichtempfindliche Detektorelemente 43 (a-d), insbesondere Detektor 45(a-d) des Detektorelements 43(a-d) automatisch oder manuell angefahren wird, bis alle vorhandenen lichtempfindlichen Detektorelemente 43 (a-d) durchlaufen sind. Anschließend kann das Kalibrier-Segment 40 neu positioniert werden, wenn das Kalibrier-Segment 40 kleiner als der Bearbeitungstisch 9,21,30 ausgebildet ist, wie dies in Figur 6a schematisch dargestellt ist oder kann die Fokussiereinheit bzw. Laserkopf 12,26,29 auf die nächste Kalibrierplatte 42 wechseln, wenn mehrere Kalibrier-Segmente 40 gleichzeitig eingelegt sind.

Wesentlich ist, dass die Detektorelemente 43, insbesondere die Mittelpunkte bzw. der Detektor 45 des Detektorelements 43, zueinander exakt vermessen sind, um einen automatischen Kalibrierabgleich aller Detektorelemente 43 auf einem Kalibrier-Segment 40 zu ermöglichen. Dabei ist es möglich, dass die gemessenen Positionen bzw. Lage in der Steuerelektronik 48 gespeichert sind, sodass diese von der Steuereinheit 13,24,31 und/oder einer externen Komponente 34 zur Auswertung abgerufen werden kann oder das die Steuerelektronik 48 die Auswertung vornimmt und nur noch das Ergebnis der aufgefundenen Positionen übermittelt werden, worauf ein Abgleich mit der von der Lasermaschine 1 angefahrenen Positionen erstellt werden kann und auf die Geometriefehler rückgeschlossenen werden kann.

Damit eine Auswertung der Position des Lichtstrahls 17 auf dem Detektorelement 43, insbesondere der Fotodiode 44 oder Bildsensor 57, möglich ist, muss das Zentrum der Fotodiode 44 oder Bildsensor 57 bzw. des Detektors 45 exakt vermessen sein, um eine Abweichung berechnen zu können. Hierzu ist eine 4-Quandraten Fotodiode 44 vorgesehen, die aus 4 Quadranten 54a,54b,54c,54d gebildet sind, die die lichtempfindliche Schicht der Fotodiode 44 in vier Bereiche aufteilt, d.h., dass die segmentierten Flächen der Fotodiode 44 eng beieinander liegen, sodass nur ein schmaler, kreuzförmiger Spalt zwischen den lichtempfindlichen Quadranten 54a.d liegt. Trifft nunmehr ein Lichtstrahl 17, wie in Figur 8, 9 und 10 gezeigt, auf die lichtempfindliche Schicht der Fotodiode 44, so löst dies einen Stromfluss aus. Dabei kann aufgrund der Verhältnisse der Ströme in den vier Quadranten 54a-d der Fotodiode 44 die Flächenbelegung des auftreffenden Lichtstrahls 17 erkannt werden. Im gezeigten Ausführungsbeispiel ist dies der Quadrant 54c, auf dem der Lichtstrahl 17 auftrifft.

Um nunmehr die genaue Relativ-Position des auftreffenden Lichtstrahls 17 zu ermitteln, ist es erforderlich, dass der Lichtstrahl 17 über eine definierte Bewegungsbahn 55,56 verstellt wird, wie dies in Figur 9 und 10 mit strichlierten Linien gezeigt ist. Hierbei sind zwei Ausführungsbeispiele von möglichen Bewegungsbahnen 55,56 in den Figuren 9 und 10 gezeigt, wobei die Bewegungsbahn 55 in Figur 9 einen spiralförmigen Verlauf hat, wogegen in Figur 10 die Bewegungsbahn 56 geradlinig kreuzförmig verläuft, d.h., dass die Fokussiereinheit bzw. der Laserkopf 12,26,19 oder der Bearbeitungstisch 9,21,30 entsprechend angesteuert werden, um eine Bewegungsbahn 55,56 mit aktiviertem Lichtstrahl 17 zu durchlaufen. Gleichzeitig werden vom Detektorelemente 43 oder der Steuerelektronik 48 die Schnittpunkte beim Wechseln in einen anderen Quadranten 54a,b,c,d erfasst und gespeichert. Anschließend kann die Abweichung des positionierten Lichtstrahls 17, insbesondere des LaserPointer 16, durch die aufgefundenen Schnittpunkte zu den anderen Quadranten 54a-d und zum Mittelpunkt bzw. zur Mitte des Detektors 45 des Detektorelements 43 ermittelt bzw. berechnet werden.

Man kann also sagen, dass am Detektorelemente 43 einer 4-Quadranten Fotodiode 44 angeordnet ist und der Lichtstrahl 17 auf einen der vier Quadranten 54a-d gerichtet wird, worauf eine Bewegung des Lichtstrahls 17 oder des Detektorelements 43 gemäß einer Bewegungsbahn 55,56 durchgeführt wird, sodass ein Schnittpunkt zu den Rändern der Quadranten 54a-d des Detektors 45 ermittelt wird, worauf die Lage der Mittelposition des Detektors 45 berechnet wird, d.h., dass von dem auftreffenden Lichtstrahl 17 am Detektorelement 43 die Lage bzw. Position des Mittelpunktes bzw. Mittelposition des Detektors 45 bestimmt, insbesondere berechnet wird.

Beim Einsatz eines Bildsensors 57 am Detektorelements 43 wird der Lichtstrahl 17 ebenfalls auf die lichtempfindliche Fläche bzw. Schicht gerichtet, sodass anschließend mit dem Lichtstrahl 17 oder mit dem Detektorelement 43 eine Zentrierbewegung auf die Mitte des Bildsensors 57 durchgeführt wird, worauf die Lage der Mittelposition des Bildsensors 57 ermittelt wird (nicht dargestellt) Auch hier wird eine Bewegungsbahn 55,56 abgefahren, wobei der Vollständigkeit halber darauf hingewiesen wird, dass die Ausführung nicht auf die beiden dargestellten Bewegungsbahnen 55, 56 für die Anwendung bei der Fotodiode 44 und Bildsensor 57 beschränkt sind.

Nachdem alle Detektorelemente 43 eines Kalibrier-Segmentes 40 durchlaufen sind, stoppt der Kalibrierprozess, um das Kalibrier-Segment 40, insbesondere die Kalibrierplatte 42, neu zu positionieren oder den Kalibriervorgang zu beenden, sodass anschließend die Berechnung der Fehleranalyse mit den ermittelten Daten durchgeführt werden kann. Hierbei kann eine Auflistung von Fehlerparametern, wie in der nachstehenden Auflistung gezeigt, ermittelt und angezeigt werden.

| Fehlerparameter | Beschreibung | Identifizierter Wert |
|---|---|---|
| *P1* | Schiefstellung der x-Achse gegenüber der y-Achse | 0.00794° |
| *P2* | Schiefstellung x-Achse gegenüber der y-Achse variabel | -0.06305° |
| *P3* | Drehung des Laserstrahls um die _{E}^{x}-Achse | -0.4565° |
| *P4* | Drehung des Laserstrahls um die _{E}^{y}-Achse | 1.1379° |
| *P5* | Amplitude des Torsionswinkels der x-Achse | -0.0221° |
| *P6* | Getriebeübersetzungsfehler der x-Achse | -2.746*10⁻⁶ |
| *P7* | Getriebeübersetzungsfehler der y-Achse | -3.289*10⁻⁵ |
| *P8* | Durchbiegungsamplitude der y-Achse in x-Richtung | -0.890mm |
| *P9* | Durchbiegungsamplitude der y-Achse in z-Richtung | -8.715mm |
| *P10* | Durchbiegungsamplitude der x-Achse in y-Richtung | -0.514mm |
| *P11* | Durchbiegungsamplitude der X-Achse in z-Richtung | -0.536mm |
| *usw.* | usw. | usw. |

Die Anzeige der statischen Geometriefehler kann dabei direkt auf der Lasermaschine 1 oder auf einer externen Komponente 34, insbesondere Laptop 34a, erfolgen. Die Fehlerbehebung kann anschließend mechanisch, regelungstechnisch und/oder softwaretechnisch erfolgen. Bei der mechanischen Fehlerbehebung werden die entsprechenden Bauelemente entsprechend manuell korrigiert bzw. eingestellt, wogegen bei der regelungstechnisch und/oder softwaretechnischen Fehlerbehebung entsprechende Korrigierwerte hinterlegt und gespeichert werden. Dabei ist es auch möglich, dass zur Beseitigung der Geometriefehler Justagenhilfen für die einzelne oder alle Fehlerparameter ausgegeben werden, wie beispielsweise: "drehe Schraube x um Winkel y, etc." Damit wird erreicht, dass eine einfache, schnelle und präzise Fehlerbeheben von neu zusammengebauten Lasermaschinen 1 und bereits im Einsatz befindliche Lasermaschinen 1 durchgeführt werden kann.

Wie zuvor beschrieben, wird der Vollständigkeit halber erwähnt, dass auch beim Galvo-Markierlaser 2c das Kalibrier-Segment 40 eingelegt werden kann und durch Aktivieren eines Kalibrierprozesses die statischen Geometriefehler ermittelt werden. Dabei ist es auch möglich, dass der Laserkopf bzw. die Fokussiereinheit 29 zusätzlich zu dem verstellbaren Spiegel 28 verstellt werden kann, um den gesamten Bearbeitungstisch 30 mit dem Laserstrahl 10 und/oder Lichtstrahl 17 zu erreichen.

Weiters ist es auch möglich, dass die Kalibrierung der Lasermaschine 1 jederzeit bei bestehenden Anlagen nach der Auslieferung vom Hersteller durchgeführt werden kann. Vorzugsweise wird dies als Dienstleistung beispielsweise im Rahmen von Wartungsverträgen angeboten. Auch dient das System als Diagnosehilfe bei reklamierter Bearbeitungsqualität (Maßhaltung, Verzug, etc.). Hierbei kann dies direkt vor Ort beim Kunden durchgeführt werden. Auch bei Tausch von Komponenten, wie beispielsweise einer Achse, kann anschließend ein Diagnoseprozess bzw. Kalibrierprozess durchlaufen werden.

Es ist auch möglich, dass anstelle der Fotodiode 44 ein Bildsensor 57 am Detektorelement 43 eingesetzt werden kann, wie dies in Figur 11 schematisch dargestellt ist. Weiters ist es auch möglich, dass der optische Marker 52 die Bezeichnung bzw. Kennung der eingelegten Kalibrierplatte 42 dient. Dies ist dann von Vorteil, wenn mehrere unterschiedlich aufgebaute Kalibrier-Segmenten 40 vorhanden bzw. eingesetzt werden, um die eingelegte Kalibrierplatte 42 zu erkennen.

Grundsätzlich sei erwähnt, dass das Kalibrier-Segment 40 durch die Kalibrierplatte 42 gebildet ist, wobei die Kalibrierplatte 42 mehrere Detektorelemente 43 beinhaltet. Ein Detektorelement 43 ist mit einem oder mehreren Detektoren 45 ausgebildet. Die Detektoren 45 sind Sensoren, insbesondere Fotodiode 44 oder Bildsensor 57, von diesem ist ein festgelegter Punkt, vorzugsweise der Mittelpunkt zu bestimmen. Der Punkt, insbesondere Mittelpunkt ist dabei exakt zu den anderen Punkten, insbesondere Mittelpunkten, vermessen worden.

Der Ordnung halber wird darauf hingewiesen, dass die Erfindung nicht auf die dargestellten Ausführungsvarianten beschränkt ist, sondern auch weitere Ausbildungen und Aufbauten beinhalten können, wie sie in den Ansprüchen definiert sind.

## Patentansprüche

1. Verfahren zum Ermitteln von, insbesondere statischen, Geometriefehlern einer Lasermaschine (1) zum Schneiden, Gravieren, Markieren und/oder Beschriften eines Werkstückes (7), bei dem in einem Gehäuse (3,19) der Lasermaschine (1) zumindest eine Strahlenquelle (4,22) in Form eines Lasers (5,6, 23,27) eingesetzt wird, wobei bei aktiviertem Laser (5,6, 23,27) ein Laserstrahl (10) über Umlenkelemente (11) zu einer Fokussiereinheit (12,26,29) bzw. Laserkopf (12,26,29) gelenkt wird, wobei ein Bearbeitungstisch (9,21,30) zum Positionieren eines Werkstücks (7) angeordnet ist, wobei zumindest ein Kalibrier-Segment (40) mit zumindest drei lichtempfindlichen Detektorelementen (43(a-d)) am Bearbeitungstisch (9,21,30) aufgelegt wird,
**dadurch gekennzeichnet, dass** ein Kalibrierprozess gestartet wird, bei dem eine in dem Laserstrahlverlauf eingekoppelte Lichtquelle (16) oder zusätzliche an der Fokussiereinheit (12,26,29) bzw. Laserkopf (12,26,29) montierte Lichtquelle (16), insbesondere ein LaserPointer (16), aktiviert wird und die Fokussiereinheit (12,26,29) bzw. der Laserkopf (12,26,29) automatisch eine definierte Position oder eine manuell eingestellte Position eines Detektorelementes (43(a-d)) anfährt, worauf das Auftreffen eines Lichtstrahls (17), insbesondere eines LaserPointer-Punktes (17), auf einem lichtempfindlichen Detektor (45(a-d)) am Detektorelement (43(a-d)) insbesondere einem Mittelpunkt des Detektors (45(a-d) am Detektorelement (43(a-d)), erfasst und ausgewertet wird, wobei der Detektor (45(a-d)) aus einer 4-Quadranten Fotodiode (44(a-d)) oder Bildsensor (57) gebildet ist und der Lichtstrahl (17) auf den Detektor (45(a-d)) gerichtet wird, worauf eine Bewegung des Lichtstrahls (17) oder des Detektorelements (43(a-d)) gemäß definierter Bewegungsbahn (55,56) durchgeführt wird, sodass bei einer Quadranten-Fotodiode ein Schnittpunkt des Lichtstrahls (17) zu den Rändern der Quadranten (54a-d) des Detektors (45(a-d)) ermittelt wird, worauf die Lage der Mittelposition des Detektors (45(a-d)) berechnet wird, bzw. bei einem Bildsensor die Mittelposition des Detektors (45(a-d)) ermittelt wird, worauf das nächste lichtempfindliche Detektorelement (43(a-d)), insbesondere der Detektor des Detektorelements (43(a-d)) automatisch oder manuell angefahren wird, bis alle vorhandenen lichtempfindlichen Detektorelemente (43(a-d)) durchlaufen sind.

2. Verfahren nach Anspruch 1 oder 2, **dadurch gekennzeichnet, dass** am Bearbeitungstisch (9,21,30) ein Kalibrier-Segment (40) eingelegt wird, das in etwa die Größe des Bearbeitungstisches (9,21,30) aufweist.

3. Verfahren nach Anspruch 1 oder 2, **dadurch gekennzeichnet, dass** am Bearbeitungstisch (9,21,30) ein oder mehrere Kalibrier-Segmente (40) eingelegt werden, die kleiner als die Größe des Bearbeitungstisches (9,21,30) ausgebildet sind.

4. Verfahren nach Anspruch 1,2 oder 3, **dadurch gekennzeichnet, dass** am Bearbeitungstisch (9,21,30) das Kalibrier-Segment (40) mehrmals an unterschiedlichen Positionen des Bearbeitungstisches (9,21,30) eingelegt wird.

5. Verfahren nach einem der vorhergehenden Ansprüche, **dadurch gekennzeichnet, dass** die lichtempfindlichen Detektorelemente (43(a-d)), insbesondere die Mittelpunkte der Detektoren (45(a-d)), exakt zueinander vermessen wurden und vorzugsweise die Daten auf dem Kalibrier-Segment (40) abrufbar sind oder in der Steuereinheit (13,24,31) oder einer externen Komponente (34, insbesondere Laptop (34a) oder Cloud, hinterlegt sind.

6. Verfahren nach einem der vorhergehenden Ansprüche, **dadurch gekennzeichnet, dass** eine Vielzahl von Detektorelementen (43(a-d)) auf einer Kalibrierplatte (42) des Kalibier-Segments (40) angeordnet sind, wobei gleich hoch angeordnete Detektorelemente (43(a-d) vorhanden sind.

7. Verfahren nach einem der vorhergehenden Ansprüche, **dadurch gekennzeichnet, dass** mit dem aktivierten Lichtstrahl (17) eine definierte Bewegungsbahn (55, 56) durch Verstellen der Fokussiereinheit (12,26,29) bzw. Laserkopfes (12,26,29) abgefahren wird, um die Position des Lichtstrahls (17), insbesondere des LaserPointer-Punktes (17), am lichtempfindlichen Detektor (45(a-d)) auszuwerten.

8. Verfahren nach einem der Ansprüche 2 bis 7, **dadurch gekennzeichnet, dass** die Bewegungsbahn (55) in Form mehrerer unterschiedlicher Kreise oder einer Spirale ausgeführt wird.

9. Verfahren nach einem der Ansprüche 2 bis 8, **dadurch gekennzeichnet, dass** die Bewegungsbahn (56) in Form eines linearen Rasters ausgeführt wird.

10. Verfahren nach einem der vorhergehenden Ansprüche 1,3 bis 8, **dadurch**
**gekennzeichnet, dass** mit dem Lichtstrahl eine Zentrierbewegung auf die Mitte des Bildsensors (57) durchgeführt wird, wodurch die Lage der Mittelposition des Bildsensors (57) ermittelt wird.

11. Verfahren nach einem der vorhergehenden Ansprüche, **dadurch gekennzeichnet, dass** das Kalibrier-Segment (40) eine Steuerelektronik (48) aufweist, die drahtgebunden über eine Anschlussleiste (51) oder drahtlos mit der Steuereinheit (13,24,31) der Lasermaschine (1) oder einer externen Komponente (34), insbesondere Computer bzw. Laptop (34a), verbunden wird.

12. Verfahren nach einem der vorhergehenden Ansprüche, **dadurch gekennzeichnet, dass** am Kalibrier-Segment ein optischer Marker (52), insbesondere Data Matrix-Code (52a), zur näherungsweisen Ermittlung der Lage des Kalibrier-Segments (40) abgefragt wird.

13. Verfahren nach einem der vorhergehenden Ansprüche, **dadurch gekennzeichnet, dass** vom Kalibrierungsprozess die statischen Geometriefehler wie Achsschiefstellungen, Linearitätsfehler, Achsbiegungen, Achsverdrehungen, Offsetfehler, usw. ausgewertet werden.

14. Verfahren nach einem der vorhergehenden Ansprüche, **dadurch gekennzeichnet, dass** nach Auswertung der statischen Geometriefehler diese mechanisch, regelungstechnisch und/oder softwaretechnisch korrigiert werden.

15. Verfahren nach einem der vorhergehenden Ansprüche, **dadurch gekennzeichnet, dass** in insbesondere vorgegebenen, Zeitabständen der Kalibrierprozess zur Überprüfung und gegebenenfalls Berichtigung der statischen Geometriefehler an Lasermaschinen (1) durchgeführt wird.

16. Kalibrier-Segment (40) zum Ermitteln statischer Geometriefehler von Lasermaschinen (1), wobei auf einer Kalibrierplatte (42) zumindest drei lichtempfindliche Detektorelemente (43(a-d)) angeordnet sind, wobei die Detektorelemente (43(a-d)) in unterschiedlichen Höhen (47) positioniert sind oder mehrere gleich hoch angeordnete Detektorelemente (43(a-d)) vorhanden sind, **dadurch gekennzeichnet, dass** auf der Kalibrierplatte (42) eine Steuerelektronik (48) zur Auswertung des auftreffenden Lichtstrahls (17) auf einen Detektorelement (43(a-d)), insbesondere Detektor 45(a-d)), angeordnet ist.

17. Kalibrier-Segment (40) nach Anspruch 16, **dadurch gekennzeichnet, dass** am Detektorelement (43(a-d) eine Fotodiode (44(a-d), insbesondere durch eine 4-Quadranten Fotodiode (44(a-d), oder ein Bildsensor (57) angeordnet ist.

18. Kalibrier-Segment (40) nach Anspruch 16 oder 17, **dadurch gekennzeichnet, dass** auf der Kalibrierplatte (42) ein optischer Marker, insbesondere ein QR-Code, zur Ermittlung der Lage der Kalibrierplatte (42) angeordnet ist.

## Claims

1. Method for determining, in particular, static geometric errors of a laser machine (1) for cutting, engraving, marking, and/or labeling a workpiece (7), in which at least one radiation source (4,22) in the form of a laser (5,6, 23,27) is used in a housing (3,19) of the laser machine (1), wherein, when the laser (5,6, 23,27) is activated, a laser beam (10) is directed via deflection elements (11) to a focusing unit (12,26,29) or laser head (12,26,29), wherein a work table (9,21,30) is arranged for positioning a workpiece (7), wherein at least one calibration segment (40) with at least three photosensitive detector elements (43(a-d)) is placed on the work table (9,21,30), **characterized in that** a calibration process is started, in which a light source (16) coupled into the laser beam path or an additional light source (16) mounted on the focusing unit (12,26,29) or laser head (12,26,29), in particular a laser pointer (16), is activated, and the focusing unit (12,26,29) or the laser head (12,26,29) automatically moves to a defined position or a manually set position of a detector element (43(a-d)), whereupon the incidence of a light beam (17), in particular a laser pointer spot (17), on a photosensitive detector (45(a-d) on the detector element (43(a-d)), in particular a center point of the detector (45(a-d) on the detector element (43(a-d)), is detected and evaluated, wherein the detector (45(a-d9)) is formed from a 4-quadrant photodiode (44(a-d)) or image sensor (57) and the light beam (17) is directed onto the detector (45(a-d)), whereupon a movement of the light beam (17) or the detector element (43(a-d)) is carried out according to a defined movement path (55,56), so that in the case of a quadrant photodiode, an intersection point of the light beam (17) with the edges of the quadrants (54a-d) of the detector (45(a-d)) is determined, whereupon the position of the center of the detector (45(a-d)) is calculated, or in the case of an image sensor, the center position of the detector (45(a-d)) is determined, whereupon the next photosensitive detector element (43(a-d)), in particular the detector of the detector element (43(a-d)), is automatically or manually approached until all available photosensitive detector elements (43(a-d)) have been traversed.

2. Method according to claim 1 or 2, **characterized in that** a calibration segment (40) is inserted on the work table (9,21,30), which approximately corresponds to the size of the work table (9,21,30).

3. Method according to claim 1 or 2, **characterized in that** one or more calibration segments (40) are inserted on the work table (9,21,30), which are designed to be smaller than the size of the work table (9,21,30).

4. Method according to claim 1, 2, or 3, **characterized in that** the calibration segment (40) is inserted several times at different positions of the work table (9,21,30).

5. Method according to one of the preceding claims, **characterized in that** the photosensitive detector elements (43(a-d)), in particular the centers of the detectors (45(a-d)), have been precisely measured relative to each other and preferably the data are retrievable on the calibration segment (40) or stored in the control unit (13,24,31) or an external component (34), in particular laptop (34a) or cloud.

6. Method according to one of the preceding claims, **characterized in that** a plurality of detector elements (43(a-d)) are arranged on a calibration plate (42) of the calibration segment (40), wherein detector elements (43(a-d)) arranged at the same height are present.

7. Method according to one of the preceding claims, **characterized in that** with the activated light beam (17), a defined movement path (55, 56) is traversed by adjusting the focusing unit (12,26,29) or laser head (12,26,29) to evaluate the position of the light beam (17), in particular the laser pointer spot (17), on the photosensitive detector (45(a-d)).

8. Method according to one of claims 2 to 7, **characterized in that** the movement path (55) is designed in the form of several different circles or a spiral.

9. Method according to one of claims 2 to 8, **characterized in that** the movement path (56) is designed in the form of a linear grid.

10. Method according to one of the preceding claims 1, 3 to 8, **characterized in that** a centering movement onto the center of the image sensor (57) is carried out with the light beam, whereby the position of the center of the image sensor (57) is determined.

11. Method according to one of the preceding claims, **characterized in that** the calibration segment (40) has a control electronics (48), which is connected via a terminal strip (51) or wirelessly to the control unit (13,24,31) of the laser machine (1) or an external component (34), in particular computer or laptop (34a).

12. Method according to one of the preceding claims, **characterized in that** an optical marker (52), in particular a data matrix code (52a), is queried on the calibration segment for approximate determination of the position of the calibration segment (40).

13. Method according to one of the preceding claims, **characterized in that** the calibration process evaluates the static geometric errors such as axis misalignments, linearity errors, axis bends, axis twists, offset errors, etc.

14. Method according to one of the preceding claims, **characterized in that** after evaluation of the static geometric errors, these are corrected mechanically, by control technology, and/or by software.

15. Method according to one of the preceding claims, **characterized in that**, in particular at predetermined time intervals, the calibration process is carried out on laser machines (1) to check and, if necessary, correct the static geometric errors.

16. Calibration segment (40) for determining static geometric errors of laser machines (1), wherein at least three photosensitive detector elements (43(a-d)) are arranged on a calibration plate (42), wherein the detector elements (43(a-d)) are positioned at different heights (47) or several detector elements (43(a-d)) arranged at the same height are present, **characterized in that** a control electronics (48) for evaluating the incident light beam (17) on a detector element (43(a-d)), in particular detector 45(a-d)), is arranged on the calibration plate (42).

17. Calibration segment (40) according to claim 16, **characterized in that** a photodiode (44(a-d)), in particular a 4-quadrant photodiode (44(a-d)), or an image sensor (57) is arranged on the detector element (43(a-d)).

18. Calibration segment (40) according to claim 16 or 17, **characterized in that** an optical marker, in particular a QR code, for determining the position of the calibration plate (42) is arranged on the calibration plate (42).

## Revendications

1. Procédé pour déterminer, en particulier, les erreurs géométriques statiques d'une machine laser (1) pour la découpe, la gravure, le marquage et/ou l'inscription d'une pièce (7), dans lequel au moins une source de rayonnement (4,22) sous forme de laser (5,6, 23,27) est utilisée dans un boîtier (3,19) de la machine laser (1), où, lorsque le laser (5,6, 23,27) est activé, un faisceau laser (10) est dirigé via des éléments de déviation (11) vers une unité de focalisation (12,26,29) ou une tête laser (12,26,29), où une table de travail (9,21,30) est disposée pour positionner une pièce (7), où au moins un segment de calibrage (40) avec au moins trois éléments détecteurs photosensibles (43(a-d)) est placé sur la table de travail (9,21,30), **caractérisé en ce qu'** un processus de calibrage est lancé, dans lequel une source lumineuse (16) couplée dans le trajet du faisceau laser ou une source lumineuse supplémentaire (16) montée sur l'unité de focalisation (12,26,29) ou la tête laser (12,26,29), en particulier un pointeur laser (16), est activée, et l'unité de focalisation (12,26,29) ou la tête laser (12,26,29) se déplace automatiquement vers une position définie ou une position réglée manuellement d'un élément détecteur (43(a-d)), après quoi l'incidence d'un faisceau lumineux (17), en particulier d'un point de pointeur laser (17), sur un détecteur photosensible (45(a-d) sur l'élément détecteur (43(a-d)), en particulier un point central du détecteur (45(a-d) sur l'élément détecteur (43(a-d)), est détectée et évaluée, le détecteur (45(a-d9)) étant constitué d'une photodiode à 4 quadrants (44(a-d)) ou d'un capteur d'image (57) et le faisceau lumineux (17) étant dirigé sur le détecteur (45(a-d)), après quoi un mouvement du faisceau lumineux (17) ou de l'élément détecteur (43(a-d)) est effectué selon une trajectoire de mouvement définie (55,56), de sorte que, dans le cas d'une photodiode à quadrants, un point d'intersection du faisceau lumineux (17) avec les bords des quadrants (54a-d) du détecteur (45(a-d)) est déterminé, après quoi la position centrale du détecteur (45(a-d)) est calculée, ou, dans le cas d'un capteur d'image, la position centrale du détecteur (45(a-d)) est déterminée, après quoi le prochain élément détecteur photosensible (43(a-d)), en particulier le détecteur de l'élément détecteur (43(a-d)), est approché automatiquement ou manuellement, jusqu'à ce que tous les éléments détecteurs photosensibles (43(a-d)) disponibles aient été parcourus.

2. Procédé selon la revendication 1 ou 2, **caractérisé en ce qu'**un segment de calibrage (40) est inséré sur la table de travail (9,21,30), qui a à peu près la taille de la table de travail (9,21,30).

3. Procédé selon la revendication 1 ou 2, **caractérisé en ce qu'**un ou plusieurs segments de calibrage (40) sont insérés sur la table de travail (9,21,30), qui sont conçus pour être plus petits que la taille de la table de travail (9,21,30).

4. Procédé selon la revendication 1, 2 ou 3, **caractérisé en ce que** le segment de calibrage (40) est inséré plusieurs fois à différentes positions de la table de travail (9,21,30).

5. Procédé selon l'une des revendications précédentes, **caractérisé en ce que** les éléments détecteurs photosensibles (43(a-d)), en particulier les points centraux des détecteurs (45(a-d)), ont été mesurés précisément les uns par rapport aux autres et que, de préférence, les données sont accessibles sur le segment de calibrage (40) ou stockées dans l'unité de commande (13,24,31) ou un composant externe (34), en particulier un ordinateur portable (34a) ou le cloud.

6. Procédé selon l'une des revendications précédentes, **caractérisé en ce qu'**une pluralité d'éléments détecteurs (43(a-d)) sont disposés sur une plaque de calibrage (42) du segment de calibrage (40), des éléments détecteurs (43(a-d)) étant disposés à la même hauteur.

7. Procédé selon l'une des revendications précédentes, **caractérisé en ce qu'**avec le faisceau lumineux activé (17), une trajectoire de mouvement définie (55, 56) est parcourue en ajustant l'unité de focalisation (12,26,29) ou la tête laser (12,26,29) afin d'évaluer la position du faisceau lumineux (17), en particulier du point de pointeur laser (17), sur le détecteur photosensible (45(a-d)).

8. Procédé selon l'une des revendications 2 à 7, **caractérisé en ce que** la trajectoire de mouvement (55) est réalisée sous la forme de plusieurs cercles différents ou d'une spirale.

9. Procédé selon l'une des revendications 2 à 8, **caractérisé en ce que** la trajectoire de mouvement (56) est réalisée sous la forme d'une grille linéaire.

10. Procédé selon l'une des revendications précédentes 1, 3 à 8, **caractérisé en ce qu'**un mouvement de centrage sur le centre du capteur d'image (57) est effectué avec le faisceau lumineux, la position du centre du capteur d'image (57) étant ainsi déterminée.

11. Procédé selon l'une des revendications précédentes, **caractérisé en ce que** le segment de calibrage (40) comporte une électronique de commande (48), qui est connectée par câble via une barre de connexion (51) ou sans fil à l'unité de commande (13,24,31) de la machine laser (1) ou à un composant externe (34), en particulier un ordinateur ou un ordinateur portable (34a).

12. Procédé selon l'une des revendications précédentes, **caractérisé en ce qu'**un marqueur optique (52), en particulier un code Data Matrix (52a), est interrogé sur le segment de calibrage pour la détermination approximative de la position du segment de calibrage (40).

13. Procédé selon l'une des revendications précédentes, **caractérisé en ce que** le processus de calibrage évalue les erreurs géométriques statiques telles que les désalignements d'axe, les erreurs de linéarité, les courbures d'axe, les torsions d'axe, les erreurs de décalage, etc.

14. Procédé selon l'une des revendications précédentes, **caractérisé en ce qu'**après l'évaluation des erreurs géométriques statiques, celles-ci sont corrigées mécaniquement, par régulation et/ou par logiciel.

15. Procédé selon l'une des revendications précédentes, **caractérisé en ce qu'**à des intervalles de temps prédéfinis en particulier, le processus de calibrage est effectué sur les machines laser (1) pour vérifier et, le cas échéant, corriger les erreurs géométriques statiques.

16. Segment de calibrage (40) pour déterminer les erreurs géométriques statiques des machines laser (1), au moins trois éléments détecteurs photosensibles (43(a-d)) étant disposés sur une plaque de calibrage (42), les éléments détecteurs (43(a-d)) étant positionnés à différentes hauteurs (47) ou plusieurs éléments détecteurs (43(a-d)) étant disposés à la même hauteur, **caractérisé en ce que** sur la plaque de calibrage (42) une électronique de commande (48) pour l'évaluation du faisceau lumineux incident (17) sur un élément détecteur (43(a-d)), en particulier détecteur 45(a-d)), est disposée.

17. Segment de calibrage (40) selon la revendication 16, **caractérisé en ce qu'**une photodiode (44(a-d)), en particulier une photodiode à 4 quadrants (44(a-d)), ou un capteur d'image (57) est disposé sur l'élément détecteur (43(a-d)).

18. Segment de calibrage (40) selon la revendication 16 ou 17, **caractérisé en ce qu'**un marqueur optique, en particulier un code QR, pour la détermination de la position de la plaque de calibrage (42) est disposé sur la plaque de calibrage (42).
